# EUROPEAN PATENT SPECIFICATION

(11) **EP 1 093 548 B1**
(45) Date of publication and mention of the grant of the patent: **17.09.2003**
(21) Application number: 99929523.1
(22) Date of filing: 08.07.1999
(51) Int. Cl.: F16F 1/40

(54) **ELASTOMERIC MOUNTING**
ELASTOMERISCHE BEFESTIGUNGSSCHELLE
SUPPORT ELASTOMERE

(30) Priority: 08.07.1998 GB 9814749
(43) Date of publication of application: 25.04.2001
(73) Proprietor: TRELLEBORG AB, 231 22 Trelleborg (SE)
(72) Inventor: WHELAN, James, Matthew, Leicester LE5 1AA (GB)
(86) International application number: GB9902085
(87) International publication number: WO00003153

(56) References cited:
- FR-A- 2 270 487
- GB-A- 793 666
- US-A- 2 686 667
- US-A- 3 731 913

## Description

This invention relates to an elastomeric mounting and in particular, although not exclusively, to an elastomeric mounting suitable for use in a railway vehicle suspension and comprising an interleaved arrangement of metal plates and one or more layers of elastomeric material.

The invention relates also but not exclusively to an elastomeric mounting of the chevron type comprising an interleaved arrangement of angled metal plates arranged substantially superimposed and with the or each successive pair of plates spaced apart by a layer of elastomeric material.

In designing an elastomeric mounting suitable for use in a vehicle suspension it is necessary that the mounting can carry a large compressive load over a large range of deflection in a vertical direction. One example of a known elastomeric mounting capable of absorbing shock loads is described in the specification of GB-A-793666.

When positioned as part of a secondary suspension between a vehicle bogie and vehicle body the mounting needs to provide adequate stiffness in a transverse direction, so that the vehicle body is maintained aligned adequately with the track, but needs to be relatively compliant in the direction of travel so as to accommodate movement of the bogie relative to the vehicle body and avoid high track forces when negotiating curved track.

Another consideration in designing an elastomeric mounting may be a requirement to provide a rising stiffness rate in a vertical direction, preferably a stiffness rate that increases progressively with increasing load.

According to one aspect of the present invention an elastomeric mounting for compression and shear loading comprises a plurality of metal members with the or each successive pair of metal members being spaced apart by and bonded to a layer of elastomeric material, said metal members and elastomeric layer having a pair of substantially parallel and opposed edge regions, the material of the or each elastomeric layer when in an unstressed condition comprising a slot-like cavity which extends substantially parallel with and spaced from said edge regions of the layer, and the height of said slot-like cavity tapering progressively from an end region of the or each layer of elastomeric material to a central position mid-way between longitudinal ends of the layer.

The slot-like cavity preferably has a maximum thickness in the direction of vertical (normal) compression loading of the mounting which is less that one quarter, or preferably less than one sixth, of the maximum width of the slot as considered in a transverse direction between said opposed edge regions.

The reference to the slot-like cavity extending substantially parallel with said end regions of the layer of elastomeric material refers t the cavity extending in a lengthwise direction between the end regions.

Preferably also the width of the slot region tapers progressively from a maximum width at an end region to a minimum width at a central position mid-way between the end regions.

As considered in plan, the taper of the width of the slot preferably is in the range 4° to 20°. A suitable taper angle is 6° ± 2°. In each case the taper angle is measured relative to a central longitudinal axis, such that the relative angle between the sides of the slot is double the taper angle. Each slot may have a constant height as considered in any transverse plane, but more preferably is profiled so as to have a maximum height at the central position and minimum at transverse edge regions, being the regions of the slot closest to respective opposed edge regions of the associated elastomeric layer.

Preferably said metal members and elastomeric layer are of a substantially square or rectangular shape.

The metal members may be metal plates. The end metal members of a stack of pairs of metal members may be metal plates or metal castings. An intervening metal member also may be a casting.

The metal members may have flat surfaces to which the elastomeric layers are bonded. Alternatively the elastomeric mounting may be of the chevron type having V-shaped metal plates and/or castings and V-shaped elastomeric layers with the slot-like cavity extending in a lengthwise direction which is substantially parallel with the apex line of the V-shape.

End metal members of the chevron type. mounting may have outer faces which are of a V-shape, to have two planar portions inclined relative to one another, or flat outer faces.

Each slot may be positioned mid-way between a pair of successive metal members or it may be offset to lie closer to one of the metal members of the pair.

The slot shape may be defined substantially wholly by the elastomeric material, particularly as in the case of a slot which is positioned substantially mid-way between a pair of successive metal members. Alternatively a part of the slot shape may be defined in part by the elastomeric material and in part by one of the confronting surfaces of a pair of metal members. A slot may have a shape which, as considered in transverse cross-section, comprises a central section that lies between a pair of portions of elastomeric material and a pair of side sections which each extend from the central section to a position closer to a surface of one of metal members than the spacing of the central section from that surface of the metal member. Typically the side sections will extend towards the same metal member surface. The side sections may extend wholly to the surface of a metal member, the elastomeric material between a pair of plates then comprising in cross-section two , separate, sections, a main section which extends to each of said edge regions of the elastomeric layer and defines a void region therebetween, and an auxiliary section secured to one of the metal members to lie in said void region and define in part the shape of the slot-like cavity comprising said central and side sections Whilst that transverse cross-sectional form may be present along the whole of the length of the cavity, the invention envisages that the sections may be connected to one another locally, and there may be no slot shape at a central position between, typically mid-way between, the ends of the elastomeric layer.

In a chevron type elastomeric mounting the central, transverse position of a slot may lie closer to the outer, obtuse angle surface of one of the V-shaped components than relative to the internal surface of the other metal member of the pair between which it is sandwiched. Outer transverse edge regions of a slot may lie closer to the internal surface of one of the metal members than the outer obtuse surface of the other of the pair of metal members between which the elastomeric layer is sandwiched. If the slot is of the aforementioned type comprising, in transverse cross-section, a central section and a pair of side sections, the side sections preferably extend in a direction towards the obtuse surface of the pair of confronting obtuse and internal surfaces.

Preferably the slot is symmetrically disposed relative to the transverse width of the mounting.

The elastomeric material of the or each elastomeric layer preferably has a stiffness in the range 30 to 80 Shore A, more preferably between 45 and 65 Shore A.

According to a further aspect of the present invention a vehicle suspension system comprises an axle assembly secured to a vehicle body by at least one elastomeric mounting in accordance with the present invention.

The body and axle assembly may be secured to one another by a pair of said elastomeric mountings arranged spaced apart in the direction of the length of the rotational axis or axes of the vehicle wheels.

The axle assembly may be part of a vehicle bogie and the or each elastomeric mounting may be arranged to secure the bogie to a vehicle body. The or each mounting may be positioned substantially mid-way between the axle assembly positions of a bogie having two axle positions spaced longitudinally in the normal direction of travel.

In a vehicle suspension system the or each elastomeric mounting may be positioned so that the vehicle load acts in the thickness direction of the or each elastomeric layer, and with the opposed edge regions being spaced apart in a transverse direction perpendicular to the normal direction of vehicle travel. Accordingly the longitudinal direction of each slot formation is parallel with the normal direction of vehicle travel. In an alternative\rive construction the longitudinal direction of each slot may be arranged transverse to the normal direction of vehicle travel.

The vehicle suspension system of the present invention is particularly suitable for tracked vehicles such as rail vehicles, and is suitable also for non-tracked vehicles.

Embodiments of the invention will now be described, by way of example only, with reference to the accompanying diagrammatic drawings in which:-
- Figure 1: is a section on line 1-1 of Figure 2 of a chevron type elastomeric mounting in accordance with a first aspect of the present invention;
- Figure 2: is a section on the line 2-2 of Figure 1;
- Figure 3: is a view similar to that of Figure 1, with additional details shown;
- Figure 4: is a section on the line X-X of Figure 3;
- Figure 5: is a section on the line 5-5 of Figure 6 of another chevron type mounting in accordance with a second embodiment of the present invention;
- Figure 6: is a longitudinal section on the line 6-6 of Figure 5;
- Figure 7: is a section of the second embodiment on the line 7-7 of Figure 8, and
- Figure 8: is a section on the line 8-8 of Figure 7.

A chevron type mounting 10 comprises three angled metal plates 11 of V-section in cross-section, two metal end castings 12 each having a flat outer face 13 and a V-shaped inner face 14 corresponding to the inclination of a respective confronting face of a metal plate 11.

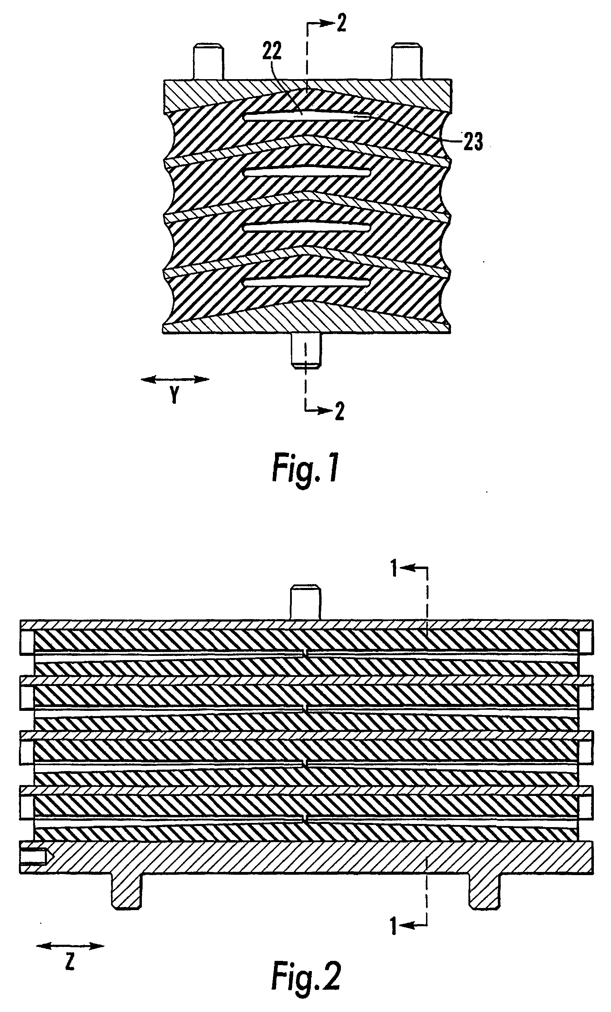

Located between said V-shaped faces and bonded thereto are four elastomeric interleaving layers 15, one layer 15 being interposed between each successive pair of V-shaped faces in an arrangement in which the metal plates and castings lie superimposed with the apex lines 16 of the respective V-shaped faces aligned. Each of the metal members and elastomeric layers has a rectangular outer profile and is longer in the apex line direction Z shown in Figure 2 than in the transverse direction Y shown in Figure 1.

Each elastomeric layer has a pair of longitudinal outer edges 17. Mid-way between those outer edges each elastomeric layer has, in the unloaded condition, a central slot 18 which extends longitudinally in the Z direction, and exhibits a double taper feature.

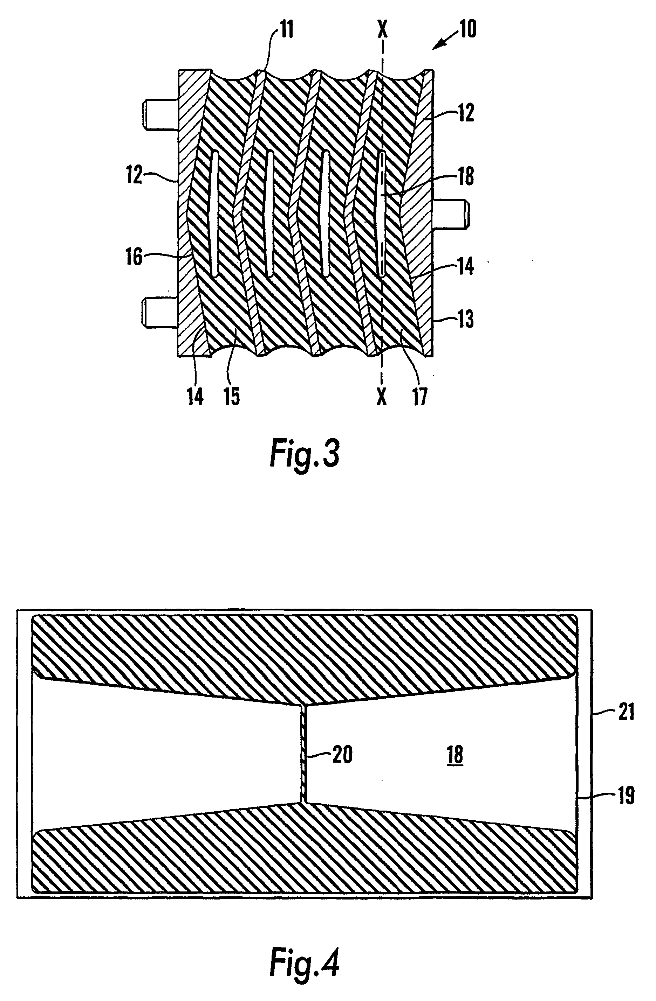

The slot 18 is tapered in the plan view shown in Figure 4 to be of decreasing width from an end region 19 to a central region 20, the taper being 6° relative to the longitudinal axis 21. Each slot is also tapered in thickness, as shown in Figure 2, with an included taper angle of 5°. Each slot has a greater height at a transversely central position 22 aligned with the longitudinal axis 21 than at an outer transverse edge region 23.

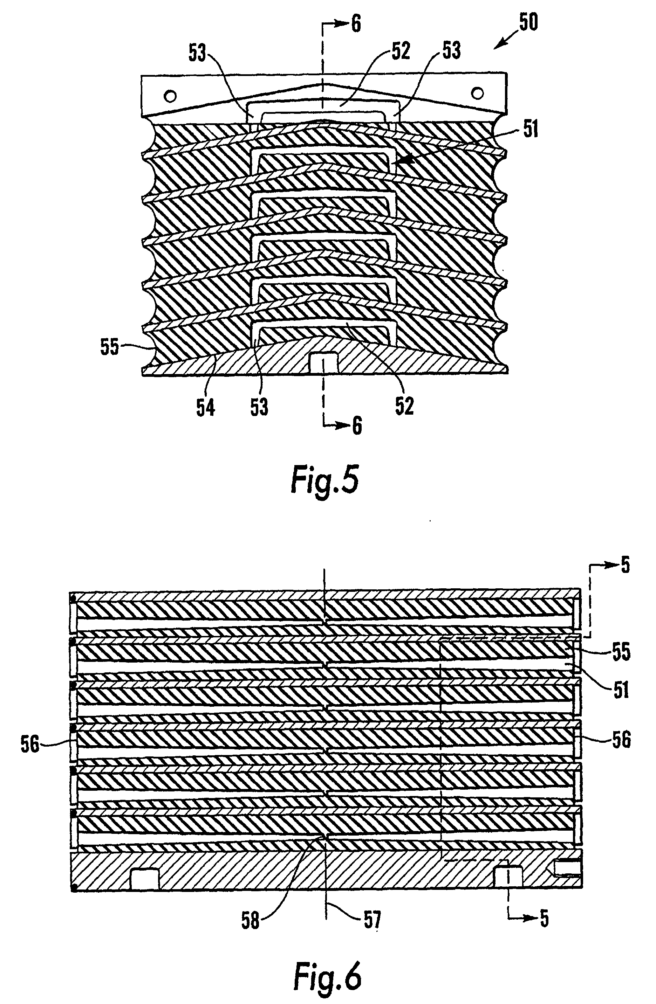

Referring now to the embodiment of Figures 5 to 8, that relates to a chevron type mounting 50 which generally is similar to that of Figures 1 to 4, but has slots 51 which are different from the slots 18.

Each slot 51 comprises a central section 52 which is substantially similar to a slot 18, and a pair of side sections 53 which extend (see figure 5) towards the obtuse surface 54 of one of a pair of metal plates between which the layer 55 with the slot 51 is sandwiched.

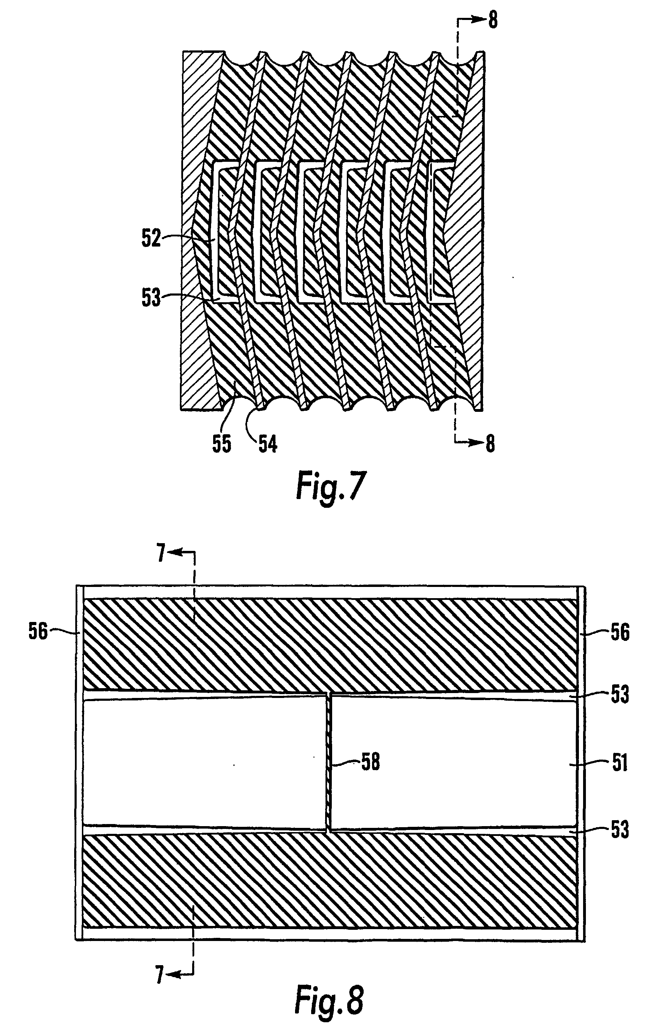

As shown in Figures 6 and 8, the central section 52 and also each side section 53 tapers to increase in width in a direction to the ends 56 from a position 57 mid-way therebetween. At the mid-way position 57 a small, thin web 58 of rubber extends across the slot, for manufacturing convenience, and thereby divides the overall length of the slot into two zones laying at respective sides of the web.

In use the side sections provide for a relatively low initial stiffness in the transverse direction of Figures 5 and 7, and an increase with higher transverse deflection when one of the side sections closes.

## Claims

1. An elastomeric mounting (10) for compression and shear loading comprising a plurality of metal members (11,12) with the or each successive pair of metal members being spaced apart by and bonded to a layer (15) of elastomeric material, said metal members and the or each elastomeric layer having a pair of substantially parallel and opposed edge regions (17), and the material of each elastomeric layer when in an unstressed condition comprising a slot-like cavity (18) which extends substantially parallel with and spaced from said edge regions (17) of the layer, **characterised in that** the height of the slot-like cavity tapers progressively from an end region (19) of the or each layer of elastomeric material to a central position (20) mid-way between longitudinal ends of the layer.

2. An elastomeric mounting according to claim 1, **characterised in that** the slot-like cavity (18) has a maximum thickness (22) in the direction of normal compression loading of the mounting which is less than one quarter of the maximum width of the slot as considered in a transverse direction between said opposed edge regions.

3. An elastomeric mounting according to claim 2, **characterised in that** said maximum thickness is less than one sixth of said maximum width.

4. An elastomeric mounting according to any one of the preceding claims, **characterised in that** the width of the slot region tapers progressively from a maximum width at an end region (19) to a minimum width at a central position (20) mid-way between the end regions.

5. An elastomeric mounting according to claim 4, **characterised in that** the taper of the width of the slot is in the range 4° to 20° as measured relative to a central longitudinal axis.

6. An elastomeric mounting according to claim 4, **characterised in that** said taper is in the range 4° to 8°.

7. An elastomeric mounting according to any one of the preceding claims, **characterised in that** as considered in a transverse plane, a slot has a non-constant height which is a maximum at a central position (22) and a minimum at transverse edge regions (23).

8. An elastomeric mounting according to any one of the preceding claims, **characterised in that** each slot-like cavity (18) is positioned off-set to lie closer to one of the metal members (11,12) of a pair of successive metal members.

9. An elastomeric mounting according to any one of the preceding claims, **characterised in that** the slot comprises in transverse cross section a central section (52) and a pair of side sections (53) each extending from the central section towards a surface of one of the metal members.

10. An elastomeric mounting according to claim 9, **characterised in that** the side sections (52) extend towards the same metal member surface.

11. An elastomeric mounting according to claim 9 or claim 10, **characterised in that** the side sections (53) each extend wholly to a metal member surface.

12. An elastomeric mounting according to any one of the preceding claims, **characterised in that** it is of the chevron type in which the metal members (10,11) and elastomeric layers (15) have confronting bonded surfaces of a V-shape in cross-section, the central, transverse portion (22) of each slot-like cavity lying closer to the outer, obtuse angle surface of one of the V-shaped components than relative to the internal surface of the other metal member of the pair between which it is sandwiched.

13. An elastomeric mounting according to claim 12, **characterised in that** outer transverse regions (22) of a slot lie closer to the internal surface of one of a pair of metal members than relative to the outer obtuse surface of the other metal member of the pair.

14. An elastomeric mounting according to claim 12 or claim 13 when dependent on any one of claims 9 to 11, **characterised in that** the side sections (53) each extend to the obtuse surface of the pair of confronting obtuse and internal surfaces.

15. An elastomeric mounting according to any one of the preceding claims, **characterised in that** the or each slot-like cavity (18) is disposed symmetrically relative to the transverse width of the mounting.

16. An elastomeric mounting according to any one of the preceding claims, **characterised in that** the or each elastomeric layer (15) has a stiffness in the range 45 to 65 Shore A.

17. A vehicle suspension system **characterised in that** it comprises an axle assembly secured to a vehicle body by at least one elastomeric mounting (10) in accordance with any one of the preceding claims.

18. A vehicle suspension system according to claim 17, **characterised in that** the body and axle assembly are secured to one another by a pair of said elastomeric mountings (10) arranged spaced apart in t he direction of the length of the rotational axis or axes of the vehicle wheels.

19. A vehicle suspension system according to claim 17 or claim 18, **characterised in that** the axle assembly is part of a vehicle bogie and the or each elastomeric mounting (10) is arranged to secure the bogie to a vehicle body.

20. A vehicle suspension system according to claim 19, **characterised in that** the or each mounting (10) is positioned substantially mid-way between the axle assembly positions of the bogie having two axle positions spaced longitudinally in the normal direction of travel.

21. A vehicle suspension system according to any one of claims 17 to 20, **characterised in that** the or each elastomeric mounting (10) is positioned so that the vehicle load acts in the thickness direction of the or each elastomeric layer (15) and said opposed edge regions (17) are spaced apart in a transverse direction perpendicular to the normal direction of vehicle travel.

## Patentansprüche

1. Elastomeres Lager (10) für Druck- und Scherbeanspruchung, das mehrere Metallglieder (11,12) aufweist, wobei das oder jedes nachfolgende Paar der Metallglieder durch eine Schicht (15) aus einem elastomeren Material beabstandet ist und mit dieser verbunden ist, wobei die Metallglieder und die oder jede elastomere Schicht ein Paar von im wesentlichen parallelen und gegenüberliegenden Kantenbereichen (17) aufweist, und wobei das Material jeder elastomeren Schicht, wenn es sich in einem unbelasteten Zustand befindet, einen schlitzförmigen Hohlraum (18) aufweist, der sich im wesentlichen parallel zu und beabstandet von den Kantenbereichen (17) der Schicht erstreckt, **dadurch gekennzeichnet, daß** die Höhe des schlitzförmigen Hohlraums von einem Endbereich (19) der oder jeder Schicht des elastomeren Materials zu einer zentralen Position (20) auf halbem Wege zwischen longitudinalen Enden der Schicht allmählich spitz zuläuft.

2. Elastomeres Lager nach Anspruch 1, **dadurch gekennzeichnet, daß** der schlitzförmige Hohlraum (18) in der Richtung der normalen Druckbeanspruchung des Lagers eine maximale Dicke (22) aufweist, die in einer Querrichtung zwischen den gegenüberliegenden Kantenbereichen betrachtet kleiner als ein Viertel der maximalen Breite des Schlitzes ist.

3. Elastomeres Lager nach Anspruch 2, **dadurch gekennzeichnet, daß** die maximale Dicke kleiner als ein Sechstel der maximalen Breite ist.

4. Elastomeres Lager nach einem der vorhergehenden Ansprüche, **dadurch gekennzeichnet, daß** die Breite des Schlitzbereiches von einer maximalen Breite an einem Endbereich (19) zu einer minimalen Breite an einer zentralen Position (20) auf halbem Wege zwischen den Endbereichen allmählich spitz zuläuft.

5. Elastomeres Lager nach Anspruch 4, **dadurch gekennzeichnet, daß** die Verjüngung der Breite des Schlitzes, relativ zu einer zentralen Längsachse gemessen, im Bereich von 4° bis 20° liegt.

6. Elastomeres Lager nach Anspruch 4, **dadurch gekennzeichnet, daß** die Verjüngung im Bereich von 4° bis 8° liegt.

7. Elastomeres Lager nach einem der vorhergehenden Ansprüche, **dadurch gekennzeichnet, daß** in einer transversalen Ebene betrachtet ein Schlitz eine nicht konstante Höhe aufweist, die an einer zentralen Position (22) maximal ist und an transversalen Kantenbereichen (23) minimal ist.

8. Elastomeres Lager nach einem der vorhergehenden Ansprüche, **dadurch gekennzeichnet, daß** jeder schlitzförmige Hohlraum (18) so versetzt angeordnet ist, daß er näher zu einem der Metallglieder (11,12) eines Paars nachfolgender Metallglieder liegt.

9. Elastomeres Lager nach einem der vorhergehenden Ansprüche, **dadurch gekennzeichnet, daß** der Schlitz im transversalen Querschnitt einen zentralen Abschnitt (52) und ein Paar Seitenabschnitte (53) aufweist, die sich jeweils vom zentralen Abschnitt zu einer Oberfläche eines der Metallglieder erstrecken.

10. Elastomeres Lager nach Anspruch 9, **dadurch gekennzeichnet, daß** sich die Seitenabschnitte (52) zur selben Metallgliedoberfläche hin erstrecken.

11. Elastomeres Lager nach Anspruch 9 oder 10, **dadurch gekennzeichnet, daß** sich die Seitenabschnitte (53) jeweils gänzlich zu einer Metallgliedoberfläche erstrecken.

12. Elastomeres Lager nach einem der vorhergehenden Ansprüche, **dadurch gekennzeichnet, daß** es aus dem Chevrontyp besteht, bei dem die Metallglieder (10, 11) und elastomeren Schichten (15) sich gegenüberliegende gebundene Oberflächen mit einer V-Form im Querschnitt aufweisen, wobei der zentrale, transversale Abschnitt (22) jedes schlitzförmigen Hohlraums näher zur äußeren, stumpfwinkligen Oberfläche einer der V-förmigen Bauteile als in bezug zur Innenfläche des anderen Metallgliedes des Paares liegt, zwischen dem er angeordnet ist.

13. Elastomeres Lager nach Anspruch 12, **dadurch gekennzeichnet, daß** äußere transversale Bereiche (22) eines Schlitzes näher zur Innenfläche eines Paares der Metallglieder als in bezug zur äußeren stumpfen Oberfläche des anderen Metallgliedes des Paares liegen.

14. Elastomeres Lager nach Anspruch 12 oder 13, falls abhängig von einem der Ansprüche 9 bis 11, **dadurch gekennzeichnet, daß** sich die Seitenabschnitte (53) jeweils zur stumpfen Oberfläche des Paares sich gegenüberliegender stumpfer und innerer Oberflächen erstrecken.

15. Elastomeres Lager nach einem der vorhergehenden Ansprüche, **dadurch gekennzeichnet, daß** der oder jeder schlitzförmige Hohlraum (18) in bezug zur transversalen Breite des Lagers symmetrisch angeordnet ist.

16. Elastomeres Lager nach einem der vorhergehenden Ansprüche, **dadurch gekennzeichnet, daß** die oder jede elastomere Schicht (15) eine Steifigkeit im Bereich 45 bis 65 Shore A aufweist.

17. Fahrzeugaufhängungssystem, **dadurch gekennzeichnet, daß** es einen Achsenaufbau aufweist, der an einer Fahrzeugkarosserie durch mindestens ein elastomeres Lager (10) nach einem der vorhergehenden Ansprüche angeordnet ist.

18. Fahrzeugaufhängungssystem nach Anspruch 17, **dadurch gekennzeichnet, daß** die Karosserie und der Achsenaufbau durch ein Paar der elastomeren Lager (10) aneinander befestigt sind, die in Richtung der Länge der Rotationsachse der Achsen der Fahrzeugräder beabstandet angeordnet sind.

19. Fahrzeugaufhängungssystem nach Anspruch 17 oder 18, **dadurch gekennzeichnet, daß** der Achsenaufbau Teil eines Fahrzeugfahrgestells ist und das oder jedes elastomere Lager (10) angeordnet ist, um das Fahrgestell an einer Fahrzeugkarosserie zu befestigen.

20. Fahrzeugaufhängungssystem nach Anspruch 19, **dadurch gekennzeichnet, daß** das oder jedes Lager (10) im wesentlichen auf halbem Wege zwischen den Achsenaufbaupositionen des Fahrgestells angeordnet ist, das zwei Achsenpositionen aufweist, die longitudinal in der normalen Bewegungsrichtung angeordnet sind.

21. Fahrzeugaufhängungssystem nach einem der Ansprüche 17 bis 20, **dadurch gekennzeichnet, daß** das oder jedes elastomere Lager (10) so angeordnet ist, daß die Fahrzeuglast in der Dickenrichtung der oder jeder elastomeren Schicht (15) wirkt und die gegenüberliegenden Kantenbereiche (17) in einer Querrichtung senkrecht zur normalen Richtung der Fahrzeugbewegung beabstandet sind.

## Revendications

1. Support élastomère (10) pour la compression et la force de découpage comprenant une pluralité d'éléments métalliques (11,12) avec la ou chaque paire successive d'éléments métalliques étant écartée et liée à une couche (15) en matériau élastomère, lesdits éléments métalliques et une seule ou toutes les couches élastomères ayant une paire de régions marginales substantiellement parallèles et opposées (17), et le matériau de chaque couche élastomère non-chargée qui comprend une cavité en forme de fente (18) laquelle s'étend substantiellement de manière parallèle et écartée desdites régions marginales (17) de la couche, **caractérisé en ce que** la hauteur de la cavité en forme de fente diminue progressivement d'une zone finale (19) d une ou chaque couche en matériau élastomère jusqu'à une position centrale (20) à mi-chemin entre les extrémités longitudinales de la couche

2. Support élastomère selon la revendication 1, **caractérisé en ce que** la cavité taillée comme une fente (18) a une épaisseur maximale (22) en direction du chargement de compression normale du support lequel est inférieur à un quart de la largeur maximale de la fente considérée en direction transversale entre ladite région marginale opposée.

3. Support élastomère selon la revendication 2, **caractérisé en ce que** ladite épaisseur maximale est inférieure à un sixième de ladite largeur maximale.

4. Support élastomère selon l'une quelconque des revendications précédentes **caractérisé en ce que** la largeur de la zone de fente diminue progressivement d'une largeur maximale dans une zone finale (19) jusqu'à une largeur minimale dans une position centrale (20) à mi-chemin entre les zones finales.

5. Support élastomère selon la revendication 4, **caractérisé en ce que** la diminution de la largeur de la fente se situe entre 4° et 20° comme mesuré en rapport à un axe longitudinal central.

6. Support élastomère selon la revendication 4, **caractérisé en ce que** ladite diminution se situe entre 4° et 8°.

7. Support élastomère selon l'une quelconque des revendications précédentes, **caractérisé en ce qu'**une fente, considérée dans un plan transversal, a une hauteur non-constante qui est maximale dans une position centrale (22) et minimale dans les régions marginales transversales (23).

8. Support élastomère selon l'une quelconque des revendications précédentes, **caractérisé en ce que** chaque cavité en forme de fente (18) est décalée l'une de l'autre pour reposer plus près d'un des éléments métalliques (11,12) d'une paire d'éléments métalliques successifs.

9. Support élastomère, selon l'une quelconque des revendications précédentes **caractérisé en ce que** la fente comprend, dans la section transversale, une section centrale (52) et une paire de sections latérales (53) chacune d'entre elles s étendant de la section centrale vers la surface d'un des éléments métalliques.

10. Support élastomère selon la revendication 9, **caractérisé en ce que** les sections latérales (52) s'étendent vers la même surface d'éléments.

11. Support élastomère selon la revendication 9 ou 10, **caractérisé en ce que** les sections latérales (53) s'étendent chacune entièrement sur une surface d'élément métallique.

12. Support élastomère selon l'une quelconque des revendications précédentes, **caractérisé en ce qu'**il est du type chevron où les éléments métalliques (10,11) et les couches élastomères (15) ont des surfaces liées opposées en forme de V en coupe transversale, la partie centrale et transversale (22) de chaque cavité en forme de fente, reposant plus près de la surface d'angle obtus extérieure d'un des composants en forme de V que de la surface interne des autres éléments métalliques de la paire entre laquelle ils sont intercalés.

13. Support élastomère selon la revendication 12, **caractérisé en ce que** les zones transversales extérieures (22) d'une fente reposent plus près de la surface interne d'une des paires d'éléments métalliques que de la surface obtus extérieure des autres éléments métalliques de la paire.

14. Support élastomère selon la revendication 12 ou 13 dépendant de n'importe laquelle des revendications de 9 à 11, **caractérisé en ce que** les sections latérales (53) s'étendent chacune sur la surface obtus de la paire des surfaces internes et obtuses opposées.

15. Support élastomère selon l'une quelconque des revendications précédentes, **caractérisé en ce que** la ou chaque cavité en forme de fente (18) est disposée symétriquement par rapport à la largeur transversale du support.

16. Support élastomère, selon l'une quelconque des revendications précédentes **caractérisé en ce que** la ou chaque couche élastomère (15) a une raideur qui se situe entre 45 et 65 Shore A.

17. Système de suspension de véhicule **caractérisé en ce qu'**il comprend un montage axial fixé à un corps de véhicule par au moins un support élastomère (10) conformément à l'une quelconque des revendications précédentes.

18. Système de suspension de véhicule selon la revendication 17, **caractérisé en ce que** le corps et montage axial sont fixés l'un à l'autre au moyen d une paire dudit support élastomère (10) écarté en direction de la longueur de l'axe rotatif ou axes des roues du véhicule.

19. Système de suspension de véhicule selon la revendication 17 ou 18, **caractérisé en ce que** le montage axial fait partie d'un véhicule à bogies et le ou chaque support élastomère (10) est disposé pour fixer le bogie à un corps de véhicule.

20. Système de suspension de véhicule selon la revendication 19, **caractérisé en ce que** le ou chaque support (10) est positionné substantiellement à mi-chemin entre les positions de montage axial du bogie ayant deux positions axiales espacées longitudinalement en direction normale pour le déplacement.

21. Système de suspension de véhicule selon l'une quelconque des revendications 17 à 20, **caractérisé en ce que** le ou chaque support élastomère (10) est positionné afin que le chargement du véhicule agisse en direction de l'épaisseur d'une seule ou de toutes les couches élastomères (15) et lesdites régions marginales opposées (17) sont écartées en direction transversale perpendiculaire à la direction normale de déplacement du véhicule.
